# EUROPÄISCHE PATENTSCHRIFT

(11) **EP 2 418 232 B1**
(45) Veröffentlichungstag und Bekanntmachung des Hinweises auf die Patenterteilung: **03.07.2013**
(21) Anmeldenummer: 10172840.0
(22) Anmeldetag: 13.08.2010
(51) Int. Cl.: C08G 63/672, C08L 67/02, D01F 6/86, D01D 5/00

(54) **Sekundäre wässrige Suspensionen bioabbaubarer Diblockcopolyester, Verfahren zu ihrer Herstellung und ihre Verwendung**
Secondary aqueous suspensions of biodegradable diblock copolyesters, method for producing same and use of same
Suspensions aqueuses secondaires de copolyester à double bloc biodégradable, son procédé de fabrication et d'utilisation

(43) Veröffentlichungstag der Anmeldung: 15.02.2012
(73) Patentinhaber: PHILIPPS-UNIVERSITÄT MARBURG, 35037 Marburg (DE)
(72) Erfinder: Greiner, Andreas, 35287, Amöneburg (DE); Agarwal, Seema, 35039, Marburg (DE); Bubel, Kathrin, 29379, Wittingen (DE)
(74) Vertreter: Buchhold, Jürgen

(56) Entgegenhaltungen:
- WO-A1-2005/116109
- WO-A1-2006/089522
- DE-A1- 3 244 011
- MARCEL THIEME ET AL: "Electrospinning and cutting of ultrafine bioerodible poly(lactide-co-ethylene oxide) tri- and multiblock copolymer fibers for inhalation applications", POLYMERS FOR ADVANCED TECHNOLOGIES, WILEY & SONS, BOGNOR REGIS, GB, 1. Januar 2009 (2009-01-01), Seiten 1-10, XP007914973, ISSN: 1042-7147, DOI: DOI:10.1002/PAT.1617 [gefunden am 2009-12-13]

## Beschreibung

Die vorliegende Erfindung stellt erstmals stabile sekundäre wässrige Suspensionen bioabbaubarer Diblockcopolyester bereit. Außerdem wird ein Verfahren zur Herstellung der erfindungsgemäßen Suspensionen offenbart. Die erfindungsgemäßen Suspension können zum Elektrospinnen von Diblockcopolyestern verwendet werden.

### Beschreibung und Einleitung des allgemeinen Gebietes der Erfindung

Die vorliegende Erfindung betrifft die Gebiete makromolekulare Chemie, Polymerchemie und Materialwissenschaften.

### Stand der Technik

Electrospinning stellt sicherlich eine der derzeit wichtigsten Methoden in Wissenschaft und Technik zur Herstellung polymerer Mikro- und Nanofaservliese wobei unter Mikro- und Nanofasern kurze oder lange Fasern (von wenigen Mikrometern und mehr) mit Durchmessern von 0,05 - 10 Mikrometer zu verstehen sind. Es können auch Fasern mit unterschiedlichen Faserdurchmessern gemeint sein, z. B. mit bimodaler Faserdurchmesserverteilung. Die Herstellungsmethoden hierfür sind allgemein bekannt.

Elektrospinnen kann aus Schmelze oder Lösung erfolgen. Das Elektrospinnen nichtwässriger Polymerlösungen ist kritisch, da die notwendigen Lösungsmittel oft toxisch, reizend, brennbar, explosiv, gesundheitsschädlich etc. sind. So können zur Herstellung von Mikro- und Nanofasergeweben bioabbaubarer Copolyester bislang nur derartige gefährliche Lösungsmittel eingesetzt werden, da ungefährliche Lösungsmittel wie Wasser in der Regel keine Copolyesterlösungsmittel sind. Es sind zwar Copolyester bekannt, die wasserlöslich sind, und Elektrospinnen sollte mit diesen Copolyestern auch möglich sein, jedoch werden dann die resultierenden elektrogesponnenen Copolyesterfasern auch wieder wasserlöslich sein, was sie für viele Anwendungen in Medizin, Pharmazie und Landwirtschaft unbrauchbar macht.

So beschreibt die WO 2006 / 023388 A2 bioabbaubare Diblock-Copolyester die eine umgekehrte thermische Gelierung aufweisen. Es werden bioabbaubare Diblockcopolymere vom AB-Typ beschrieben. Dabei ist A ein bioabbaubarer, hydrophober Block, der u.a. ein Polyester sein kann, und einen Anteil von 61 - 85 Gew.-% am Gesamtpolymer hat. B ist ein biokompatibler, hydrophiler Block bestehend aus einem monofunktionalen Polyethylenglykol mit einem mittleren Molekulargewicht zwischen 50 und 5.000 Dalton, der umgekehrte thermische Gelierung aufweist. Das Diblock-Copolymer hat ein durchschnittliches Molekulargewicht von 450 bis 15.000 Dalton und besitzt eine Wasserlöslichkeit von 3 bis 60 %.

DieWO 2005/116109 A1 beschreibt wässrige Suspensionen enthaltend einen wasserlöslichen aliphatischen Polyester.

Es ist bekannt, das aliphatische Copolyester bioabbaubar sind. Es ist auch bekannt, dass derartige bioabbaure Copolyester in Wasser dispergiert werden können, d. h. an sich wasserunlösliche Copolyester werden in Wasser nicht molekular gelöst sondern in Form kleiner Partikel in Wasser dispergiert, oft mit Hilfe von Tensiden. Dabei werden typischerweise Partikeldurchmesser von einigen 10 Nanometern bis zu einigen hundert Nanometern erreicht (oft sind die Partikel sphärisch oder nahezu sphärisch) und Feststoffgehalte von 1 - 3 Gew. %.

So offenbart die JP 2008-248016 A feine Partikel eines wenig kristallinen Copolyesterharzes und ein Verfahren zu deren Herstellung. Das Copolyesterharz ist aus Monomeren aromatischer oder aliphatischer Dicarbonsäuren sowie einer Glykolkomponente hergestellt. Optional werden geringe Mengen einer drei- oder mehrwertigen Carbonsäure und/oder ein mehrwertiger Alkohol zugesetzt. Das Copolyesterharz wird erwärmt und mit einem wasserlöslichen Harz gemischt. Anschlie-βend wird das wasserlösliche Harz in Wasser gelöst, und es wird wiederholt mit Wasser gewaschen, um das wasserlösliche Harz zu entfernen. Dann wird eine wässrige Suspension des nur wenig löslichen Copolyesterharzes zubereitet, erwärmt und mit Ultraschall behandelt.

Derartige wässrige Suspensionen sind zur Herstellung analoger Nano- und Mikrofasergewebe ungeeignet. Es ist auch bekannt, dass durch Elektrospinnen wässrige Suspensionen von Polystyrolen und Polyacrylate zusammen mit geringen Mengen wasserlösliche Polymere, z. B. Poly(vinylalkohol) oder Poly(ethylenoxid), Nano- und Mikrofaservliese erhalten werden können, jedoch sind derartige Polymere nicht bioabbaubar.

Die vorliegende Erfindung überwindet die Nachteile des Standes der Technik, indem sie erstmalig stabile wässrige Suspensionen von nicht wasserlöslichen, bioabbaubaren Diblockcopolyestern bereitstellt. Dabei beträgt die Konzentration der Diblockcopolyester in der Suspension mindestens 10 Gew.-%.

### Aufgabe

Aufgabe der Erfindung ist es, wässrige stabile Suspensionen bioabbaubarer Diblockcopolyester sowie Verfahren zur Herstellung dieser Suspensionen bereitzustellen, wobei die Suspensionen hinreichend hohe Feststoffgehalte aufweisen, so dass beim Elektrospinnen wasserunlösliche Nano- und Mikrofaservliese mit ungeordneten oder orientierten Fasern gebildet werden.

### Lösung der Aufgabe

Die Aufgabe der Bereitstellung wässriger stabiler Suspensionen bioabbaubarer Diblockcopolyester wird erfindungsgemäß gelöst durch sekundäre wässrige Suspensionen umfassend mindestens einen wasserunlöslichen bioabbaubaren aliphatischen Diblockcopolyester gemäß Formel (I) 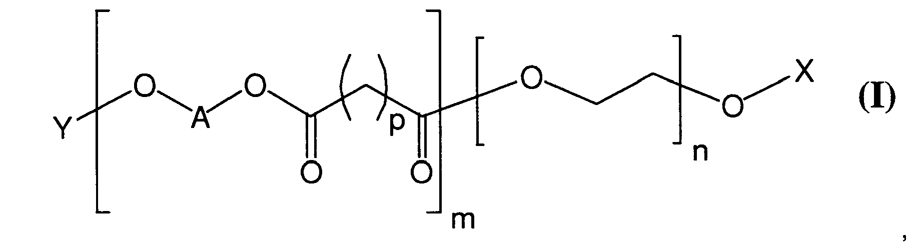 worin
- A =: eine lineare oder verzweigte Alkylengruppe mit 3 bis 12 Kohlenstoffatomen,
- p =: 1 bis 14
- m =: 10 bis 5.000
- n =: 10 bis 500
- X =: H, ein Alkoholat, eine lineare, verzweigte oder cyclische Alkylgruppe mit 1 bis 20 Kohlenstoffatomen oder eine Phenylgruppe
- Y =: H, ein Alkoholat, eine lineare, verzweigte oder cyclische Alkylgruppe mit 1 bis 20 Kohlenstoffatomen, ein Carboxylat, ein Carbonsäurerest, ein Ester,Thioester
dadurch gekennzeichnet, dass
- der mindestens eine Diblockcopolyester einen Block eines aliphatischen Polyesters und einen Block eines Polyethylenoxids enthält und
- der Feststoffgehalt des mindestens einen Diblockcopolyesters in der Suspension mindestens 10 Gew.-% beträgt und
- der Schmelzpunkt des mindestens einen Diblockcopolyesters zwischen 35 °C
   und 70 °C liegt und
- die Masse des Polyethylenoxidblocks in dem mindestens einen Diblockcopolyester zwischen 500 und 10.000 Dalton beträgt.

Die erfindungsgemäßen stabilen wässrigen sekundären Suspensionen, das Verfahren zu ihrer Herstellung sowie die Verwendung dieser Suspensionen sind nachfolgend erläutert.

Die Erfindung ist nicht auf eine der nachfolgend beschriebenen Ausführungsformen beschränkt, sondern in vielfältiger Weise abwandelbar.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Es wurde überraschend gefunden, dass wässrige Suspensionen von aliphatischen Diblockcopolyestern, die einen Block eines aliphatischen Polyesters und einen Block Polyethylenoxid, bei kurzen Ketten auch Polyethylenglykol genannt, enthalten, zu wasserstabilen Nano- und Mikrofaservliesen elektrogesponnen werden können, wenn der Feststoffgehalt mindestens 10 Gew.-% Blockcopolyester in der wässrigen Suspension beträgt.

Dabei ist festzuhalten, dass es sich bei der vorliegenden Erfindung nicht um wässrige Lösungen wasserlöslicher Polyester handelt, sondern um wässrige Suspensionen wasserunlöslicher Polyester. Unter wasserunlöslichen Diblockcopolyestern sind im Sinne der vorliegenden Erfindung Diblockcopolyester mit einer molekularen Löslichkeit in Wasser von weniger als 1 % zu verstehen.

Blockcopolymere bestehen aus Blöcken je eines Monomers. Bei Diblockcopolymeren liegen zwei Blöcke A und B vor, wobei im vorliegenden Fall A und B für mindestens ein Kettensegment eines aliphatischen Polyesters und einen Polyethylenoxidblock stehen. "Segment" bezeichnet dabei eine Kette von mehreren Repetiereinheiten. Unter einer "Repetiereinheit" versteht der Fachmann die kleinste konstitutionelle Einheit eines Polymers, deren Wiederholung ein regelmäßiges Polymer ergibt. In obiger Formel (1) gibt die in eckigen Klammern und mit Index m bezeichnete Teilstruktur die Repetiereinheit des Esters an, und die in eckigen Klammern und mit Index n bezeichnete Teilstruktur repräsentiert die Repetiereinheit des Polyethylenoxids. Liegt mehr als ein Kettensegment eines aliphatischen Esters vor, so handelt es sich um einen Polyester, und A steht für einen Polyesterblock. Mehrere Kettensegmente des Ethylenoxids bilden dementsprechend ein Polyethylenoxid. Nachfolgend wird unabhängig von der Anzahl der Kettensegmente des aliphatischen Esters von "Polyesterblock" gesprochen.
Erfindungsgemäße einzusetzende Diblockcopolyester enthalten neben dem Kettensegment eines aliphatischen Polyesters mindestens ein Segment Polyethylenoxid, bei kurzen Ketten auch Polyethylenglykol genannt.

Eine Dispersion im Sinne der vorliegenden Erfindung bezeichnet im Einklang mit dem Lehrbuchwissen eine Mischung von mindestens zwei nicht miteinander mischbaren Phasen, wobei eine der wenigstens zwei Phasen flüssig ist. In Abhängigkeit von dem Aggregatzustand der zweiten bzw. weiteren Phase werden Dispersionen in Aerosole, Emulsionen und Suspensionen unterteilt, wobei die zweite oder weitere Phase bei Aerosolen gasförmig, bei Emulsionen flüssig und bei Suspensionen fest ist. In dem erfindungsgemäßen Verfahren werden Suspensionen eingesetzt. Die erfindungsgemäß bevorzugt einzusetzenden kolloidalen Polymersuspensionen werden in der Fachsprache auch als Latex bezeichnet.

Primäre Suspensionen oder "primäre Latices" sind das direkte Ergebnis von Heterophasenpolymerisationen. Primäre wässrige (Polymer-)Suspensionen entstehen vorwiegend durch Emulsionspolymerisation, d.h. die Partikel werden bei der Synthese der Polymermoleküle in Wasser gebildet. Solche Suspensionen wurden bereits erfolgreich zum Elektrospinnen eingesetzt, sind jedoch für bioabbaubare Polymere nicht bekannt.
Sekundäre Suspensionen werden hergestellt durch die Überführung von Polymeren, die auf eine beliebige andere Art erhalten wurden, in den dispergierten Zustand. So genannte "künstliche Latices" ("artificial latices") werden erhalten durch Dispergierung eines Polymers oder einer Lösung eines Polymers in Wasser. Wird eine Polymerlösung verwendet, kann die zuerst gebildete Emulsion beispielsweise durch Verdampfen des Lösungsmittels in einem weiteren Schritt in eine Polymersuspension umgewandelt werden.
In Rahmen der vorliegenden Erfindung werden diese künstlichen Latices gemäß dem allgemeinen Sprachgebrauch des Fachmanns als sekundäre wässrige Suspensionen bezeichnet. Bei der Bildung der sekundären Suspension sind die Polymermoleküle - im Gegensatz zur primären Suspension - bereits vorhanden, es findet jedoch keine Polymerisation mehr statt.
Wenn nachfolgend von "Suspensionen" die Rede ist, so bezieht sich dieser Begriff - falls nicht anders angegeben - auf sekundäre wässrige Suspensionen gemäß obiger Definition.

Unter "stabil" wird im Rahmen der vorliegenden Erfindung verstanden, dass die erfindungsgemäße sekundäre wässrige Suspension thermodynamisch stabil ist, d.h. dass über einen Zeitraum von mindestens zwei Tagen nicht zur Koagulation neigt. Eine Koagulation ist das Zusammenlagern einzelner Polymerpartikel zu kompakteren Gebilden (dem Koagulat) und die damit verbundene Phasenseparation (Niederschlagsbildung).

Die erfindungsgemäße Suspension umfasst aliphatische Diblockcopolyester, die mindestens ein Kettensegment eines aliphatischen Polyesters und Segmente eines Polyethylenglykols enthalten. Es ist bekannt, dass Ester durch Kondensation eines Alkohols und einer Carbonsäure entstehen.
Erfindungsgemäß werden aliphatische Ester eingesetzt, die durch Kondensation einer gesättigten Alkandicarbonsäure und einem Alkandiol gebildet wurden. Dabei enthält die Alkandicarbonsäure 3 bis 16 Kohlenstoffatome und das Alkandiol 3 bis 12 Kohlenstoffatome.

Schematisch lassen sich die erfindungsgemäß einzusetzenden Diblockcopolyester wie folgt darstellen: 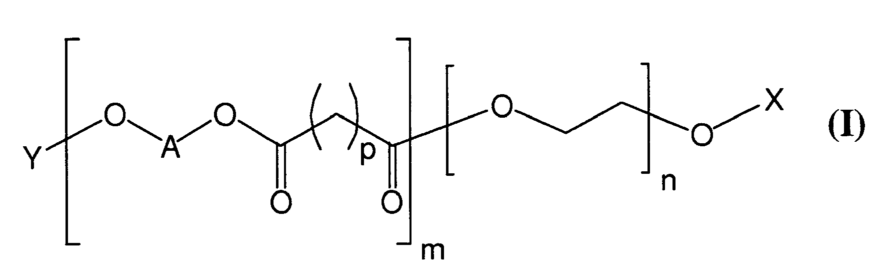 worin
- A =: eine lineare oder verzweigte Alkylengruppe mit 3 bis 12 Kohlenstoffatomen
- p =: 1 bis 14
- m =: 10 bis 5.000
- n =: 10 bis 500
- X =: H, ein Alkoholat, eine lineare, verzweigte oder cyclische Alkylgruppe mit 1 bis 20 Kohlenstoffatomen oder eine Phenylgruppe
- Y =: H, ein Alkoholat, eine lineare, verzweigte oder cyclische Alkylgruppe mit 1 bis 20 Kohlenstoffatomen, ein Carboxylat, ein Carbonsäurerest, ein Ester, ein Thioester.

In Formel (I) stammt die Gruppierung -(C=O)-(CH₂)ₚ-(C=O)-, worin p zwischen 1 und 14 beträgt, aus einer aliphatischen Dicarbonsäure mit insgesamt 3 bis 16 Kohlenstoffatomen.

A stellt eine lineare oder verzweigte Alkylengruppe mit 3 bis 12 Kohlenstoffatomen dar. Die Gruppierung -O-A-O- in Formel (1) stammt aus einem Alkandiol. Bei der linearen oder verzweigten Alkylengruppe handelt es sich um eine Ethylen-, Propylen-, Butylen-, Pentylen-, Hexylen-, Heptylen-, Octylen-, Nonylen-, Decylen-, Undecylen- oder Dodecylengruppe. Es ist bekannt, dass eine Ethylengruppe zwingend linear sein muss, während die anderen genannten Alkylengruppen linear oder verzweigt sein können.

Handelt es sich bei X und/oder Y um ein Alkoholat, so ist das Kation dieses Alkoholats vorteilhaft ein Alkali- oder Erdalkalikation, beispielsweise ein Lithium-, Natrium-, Kalium- oder Calciumkation.

Handelt es sich bei X und/oder Y um eine lineare oder verzweigte Alkylgruppe mit 1 bis 20 Kohlenstoffatomen, so ist diese ausgewählt aus Methyl, Ethyl, n-Propyl, Isopropyl, 1-Butyl, 2-Butyl, tert.-Butyl, 1-Pentyl, 2-Pentyl, 3-Pentyl, 3-Methylbutyl, 2,2-Dimethylpropyl sowie allen Isomeren von Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl.
Dem Fachmann ist bekannt, dass cyclische Alkylgruppen mindestens drei Kohlenstoffatome enthalten müssen. Vorteilhaft umfassen cyclische Alkylgruppen im Rahmen der vorliegenden Erfindung Propyl-, Butyl-, Pentyl-, Hexyl-, Heptyl-, und Octyl-Ringe. Eine cyclische Alkylgruppe im Sinne der vorliegenden Erfindung wird ausgewählt aus den genannten ringförmigen Alkylgruppen, die keine weiteren Substituenten tragen, und aus den genannten ringförmigen Alkylgruppen, welche ihrerseits an eine oder mehrere acyclische Alkylgruppen gebunden sind. Im letztgenannten Fall kann die Bindung der cyclischen Alkylgruppe X bzw. Y an das Sauerstoffatom gemäß obiger Formel über ein cyclisches oder ein acyclisches Kohlenstoffatom der cyclischen Alkylgruppe erfolgen. Cyclische Alkylgruppen enthalten gemäß obiger Definition des Begriffes "Alkylgruppe" ebenfalls insgesamt maximal 20 Kohlenstoffatome.

Handelt es sich bei Y um einen Carbonsäurerest, so ist dies ein Rest einer aliphatischen oder aromatischen Carbonsäure mit 1 bis 16 Kohlenstoffatomen, wobei dieser Rest über ein beliebiges Kohlenstoffatom der Carbonsäure mit Ausnahme des Carboxyl-Kohlenstoffatoms an die Polymerkette gebunden ist. Handelt es sich bei Y um ein Carboxylat, so liegt die Carboxylgruppe des soeben Carbonsäurerestes in protonierter Form vor. Gegenion ist in diesem Fall ein Alkali- oder Erdalkalikation, beispielsweise ein Lithium-, Natrium-, Kalium- oder Calciumkation. Handelt es sich bei Y um einen Ester, so ist ein Rest einer aliphatischen oder aromatischen Carbonsäure mit 1 bis 16 Kohlenstoffatomen über seine Carbonylgruppe mit dem Sauerstoffatom der Polymerkette verbunden.

Handelt es sich bei Y um einen Thioester, so ist ein Rest einer aliphatischen oder aromatischen Thiocarbonsäure mit 1 bis 16 Kohlenstoffatomen über seine Thiocarbonylgruppe mit dem Sauerstoffatom der Polymerkette verbunden.

Vorteilhaft ist Y eine lineare, verzweigte oder cyclische Alkylgruppe und X eine lineare, verzweigte oder cyclische Alkylgruppe oder eine Phenylgruppe. Besonders bevorzugt ist X eine Methylgruppe.

In einer vorteilhaften Ausführungsform handelt es sich bei der Alkandicarbonsäure um eine 1,ω-Alkandicarbonsäure ausgewählt aus Malonsäure, Bernsteinsäure, Glutarsäure, Adipinsäure, Pimelinsäure, Suberinsäure (auch als Korksäure bekannt), Azelainsäure, Sebacinsäure, Dodecandisäure, Brassylsäure, Tetradecandisäure, Thapsiasäure. Besonders vorteilhaft ist Adipinsäure.

In einer weiteren vorteilhaften Ausführungsform ist das Alkandiol ausgewählt aus 1,2-Propandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol. Besonders vorteilhaft ist 1,6-Hexandiol.

Besonders vorteilhaft werden aliphatische Ester eingesetzt, die durch Polykondensation einer der oben aufgeführten vorteilhaften 1,ω-Alkandicarbonsäuren mit einem der oben aufgeführten vorteilhaften Alkandiole gebildet wurden.

Unter bioabbaubar wird verstanden, dass eine Verbindung (hier: ein aliphatischer Diblockcopolyester) unter physiologischen Bedingungen durch Enzyme und/oder Mikroorganismen in kleinere Abbauprodukte zerlegt wird. Es ist bekannt, dass aliphatische Diblockcopolyester bioabbaubar sind.

Es ist vorteilhaft, wenn das Molverhältnis von Polyesterblock zu Polyethylenglykolblock 0,5 - 1,5 zu 0,5 - 1,5 mol/mol beträgt.

In einer bevorzugten Ausführungsform enthält die Suspension mindestens 10 Gew.-% und maximal 30 Gew.-% Feststoffgehalt an Diblockcopolyester.

Optional kann diese Suspension enthaltend mindestens 10 Gew.-% und maximal 30 Gew.-% Feststoffgehalt an Diblockcopolyester zusätzlich ein nichtionisches Tensid umfassen.

Besonders vorteilhaft enthält die Suspension mindestens 10 Gew.-% und maximal 30 Gew.-% Feststoffgehalt an Diblockcopolyester, aber kein zugesetztes Tensid. Die auf diese Weise erhaltenen erfindungsgemäßen Suspensionen ohne Nichtiontenside können anschließend elektroversponnen werden.

Der Zusatz eines nichtionischen Tensids zu erfindungsgemäßen Suspension hat einen positiven Einfluss auf deren Koagulationsverhalten, da der Tensidzusatz die Koagulation verhindert.

In einer Ausführungsform der erfindungsgemäßen Suspensionen können grundsätzlich beliebige dem Fachmann bekannte nichtionische Tenside zugesetzt werden. Die auf diese Weise erhaltenen erfindungsgemäßen Suspensionen umfassend Nichtiontenside können anschließend elektroversponnen werden.

Geeignete nichtionische Tenside sind dem Fachmann bekannt und können beispielsweise aus der Gruppe bestehend aus (Oligo)oxyalkylengruppen enthaltenden Tensiden, Kohlenhydratgruppen enthaltenden Tensiden und Aminoxiden ausgewählt werden. Dabei sind hochmolekulare nichtionische Tenside einzusetzen, wobei hochmolekulare Tenside eine mittlere Molekülmasse von mindestens 50.000 Dalton aufweisen.

Unter "(Oligo)oxyalkylen" -(OR¹)ᵣ- ist dabei zu verstehen, dass die (Oligo)oxyalkylengruppen enthaltenden Tenside eine oder mehrere Oxyalkylengruppen aufweisen können. In der allgemeinen Formel -(OR¹)ᵣ bedeutet R¹ eine Alkylengruppe, bevorzugt eine Alkylengruppe mit 2 bis 4 Kohlenstoffatomen, und r bedeutet mindestens 1, bevorzugt 3 bis 30. Dabei stellt r herstellungsbedingt üblicherweise einen Mittelwert der Zahl der Oxyalkylengruppen dar. Wenn r größer 1 ist, können die Reste R¹ in den Oxyalkylengruppen gleich oder verschieden sein.

Geeignete (Oligo)oxyalkylengruppen enthaltende Tenside sind z.B. ausgewählt aus der Gruppe bestehend aus (Oligo)oxyethylengruppen (Polyethylenglykolgruppen) enthaltenden Tensiden, (Oligo)oxypropylengruppen enthaltenden Tensiden, (Oligo)oxybutylengruppen enthaltenden Tensiden und Tensiden, die zwei oder mehr verschiedene Oxyalkylengruppen, z.B. (Oligo)oxyethylengruppen und (Oligo)oxypropylengruppen, in statistischer Form oder in Form von Blöcken (blockcopolymerisat) enthalten, z.B. Blockcopolymerisate auf Basis von Propylenoxid und Ethylenoxid. Bevorzugt sind die (Oligo)oxyalkylengruppen enthaltenden Tenside ausgewählt aus der Gruppe bestehend aus Fettalkoholalkoxylaten, alkoxylierten Triglyceriden und beidseitig alkylierten Polyalkylenglykolethern. Geeignete Alkoxylate oder alkoxylierte Verbindungen sind z.B. Ethoxylate, Propoxylate, Butoxylate oder statistische oder Blockcopolymere (oder -oligomere) aufgebaut aus zwei oder mehr verschiedenen Alkoxylaten, z.B. Ethoxylaten und Propoxylaten.

Geeignete Kohlenhydratgruppen enthaltende Tenside sind z.B. ausgewählt aus der Gruppe bestehend aus Alkylpolyglykosiden, Saccharoseestern, Sorbinanestern (Sorbitane), z.b. Polyoxyethylensorbitantrioleat, und Fettsäure-N-methylglucamiden (Fettsäureglucamide).

Wie aus der vorstehend genannten Gruppe von Tensiden hervorgeht, können die erfindungsgemäß geeigneten nichtionischen Tenside entweder (Oligo)oxyalkylengruppen oder Kohlenhydratgruppen oder sowohl (Oligo)oxyalkylengruppen als auch Kohlenhydratgruppen enthalten.

Geeignete Aminoxide sind insbesondere Alkyldimethylaminoxide.

Es ist möglich, einzelne Tenside oder Mischungen zweier oder mehrerer Tenside in dem erfindungsgemäßen Verfahren einzusetzen.

Die vorstehend genannten nichtionischen Tenside sind dem Fachmann bekannt und kommerziell erhältlich oder nach dem Fachmann bekannten Verfahren herstellbar.

Die erfindungsgemäß eingesetzten nichtionischen Tenside können grundsätzlich in solchen Mengen in den erfindungsgemäßen Suspensionen enthalten sein, die nicht zur Koagulation führen. Die optimalen Mengen sind hierbei unter anderem von dem eingesetzten Tensid und der Anwendungstemperatur abhängig. Je höher das durchschnittliche Molekulargewicht des Tensids ist, desto geringer ist seine optimale Menge in der Suspension. Bevorzugt ist das mindestens eine nichtionische Tensid in einer Menge von 0,5 bis 20 Gew.-%, besonders bevorzugt 0,3 bis 5 Gew.-%, bezogen auf das Gesamtgewicht des eingesetzten Diblockcopolyesters, in den Suspensionen enthalten. Besonders gute Verfahrensergebnisse - sowohl in Bezug auf die Bildung der Polymerfasern als auch in Bezug auf die Qualität, z.B. die mechanische Stabilität der Polymerfasern, werden erzielt, wenn 0,3 bis 1 Gew.-%, bevorzugt 0,5 bis 1 Gew.-%, bezogen auf das Gesamtgewicht der Suspension, des nichtionischen Tensids, z.B .eines Blockcopolymers auf Basis verschiedener Alkylenoxide, z.B. auf Basis von Propylenoxid und Ethylenoxid.

Das gemäß einer vorteilhaften Ausführungsform der vorliegenden Erfindung in den erfindungsgemäßen Suspensionen enthaltene mindestens eine nichtionische Tensid wird nachträglich, d.h. im Anschluss an die Herstellung der Suspensionen zugegeben. In einer weiteren bevorzugten Ausführungsform der vorliegenden Erfindung wird das mindestens eine nichtionische Tensid nachträglich zu der fertigen Suspension unmittelbar vor Beginn des Elektrospinnverfahrens zugegeben.

Die erfindungsgemäßen wässrigen stabilen Suspensionen bioabbaubarer Diblock-copolyester werden hergestellt durch ein Verfahren umfassend die Schritte
a) Lösen von Partikeln der bioabbaubaren Diblockcopolyester in einem polar aprotischen Lösungsmittel,
b) Mischen dieser Lösung mit Wasser und anschließendes Entfernen des polar aprotischen Lösungsmittels,
c) Dialysieren der aus Schritt b) erhaltenen Suspension gegen ein wasserlösliches Polymer.

Partikel aus bioabbaubaren Diblockcopolyestern sind kommerziell bekannt oder können auf dem Fachmann bekannte Weise selbst hergestellt werden. Diese Partikel werden gemäß Schritt a) des erfindungsgemäßen Verfahrens in einem polar aprotischen Lösungsmittel gelöst. Geeignete Lösungsmittel sind beispielsweise Ketone wie Aceton, Lactone wie 4-Butyrolacton, Nitrile wie Acetonitril, Nitroverbindungen wie Nitromethan, tertiäre Carbonsäureamide wie Dimethylformamid, Harnstoffderivate wie Tetramethylharnstoff oder Dimethylenpropylharnstoff (DMPU), Sulfoxide wie Sulfolan und Kohlensäureester wie Dimethylcarbonat oder Ethylencarbonat. Die Konzentration des Diblockcopolyesters im Lösungsmittel beträgt vorteilhaft 2 bis 10 Gew.-%, besonders bevorzugt 4 bis 5 Gew.-%.

Diese Lösung wird anschließend mit Wasser gemischt. Dabei kann Wasser vorgelegt und die Polymerlösung aus Schritt a) hinzugegeben werden oder umgekehrt, oder das Wasser und die Lösung des Diblockcopolyesters können kontinuierlich miteinander vermischt werden. Vorteilhaft werden die Lösung des Diblockcopolyesters und Wasser im Verhältnis 2 : 1 bis 1 : 2 (V/V) miteinander gemischt. Optional werden dem Wasser vor dem Mischen mit der Polymerlösung 1 bis 5 mg eines Polyalkylenglykolethers (Fettalkoholethoxylats) beigegeben, beispielsweise Polyoxyethylen(20)stearylether (Brij 78^{®}). Anschließend wird das polar aprotische Lösungsmittel entfernt.

Zuletzt wird die wässrige Polymersuspension aus Schritt b) gegen ein wasserlösliches Polymer dialysiert. Geeignete wasserlösliche Polymere sind beispielsweise Polyvinylalkohol, Polyethylenoxid, Polyethylenimin, Polyalkylenglykole wie z.B. Polyoxyethylen(20)stearylether (Brij 78^{®}) sowie vernetzte Polyacrylsäuren oder deren Salze. Vernetzte Polyacrylsäuren und deren Salze sind auch als Superabsorber bekannt.
Diblockcopolyesterlösung und wasserlösliches Polymer werden vorteilhaft im Verhältnis 1 : 5 bis 1 : 30 (V/V) gemischt.

Die auf diese Weise erhältlichen wässrigen Suspensionen bioabbaubarer Diblock-copolyester enthalten dispergierte Copolyesterpartikel mit Durchmessern von einigen 10 nm bis zu 300 nm. Die Suspensionen sind über einen Zeitraum von einigen Wochen bei Raumtemperatur stabil. Der Feststoffgehalt in der erfindungsgemäßen wässrigen Suspension beträgt mindestens 10 %. Dies ist überraschend, denn durch Dialyse der sehr ähnlichen Triblockcopolymere lässt sich keine stabile wässrige Suspension erzielen, und man erhält in diesem Fall auch keine Suspension mit derart hohem Feststoffgehalt.

Die erfindungsgemäßen stabilen sekundären wässrigen Suspensionen umfassend im Wesentlichen wasserunlösliche bioabbaubare aliphatische Diblockcopolyester können in einem Elektrospinnverfahren zur Herstellung von Nano- und Mikrofasern sowie Nano- und Mikrofaservliesen mit ungeordneten oder orientierten Fasern verwendet werden.

Nanofaservliese sind Vliese, deren Fasern Durchmesser von 10 nm bis unter 1.000 nm aufweisen, während Fasern in Mikrofaservliesen Durchmesser von 1 µm bis 10 µm aufweisen.

Das Elektrospinnen an sich ist bekannt. Dabei wird eine Lösung des verspinnenden Polymeren an einer als Elektrode dienenden Kante einem hohen elektrischen Feld ausgesetzt. Beispielsweise kann dies geschehen, indem die zu verspinnende Lösung in einem elektrischen Feld durch eine mit einem Pol einer Spannungsquelle verbundenen Elektrode, beispielsweise einer Kanüle oder Walze, extrudiert wird. Es entsteht ein auf die Gegenelektrode gerichteter Materialstrom, der sich auf dem Weg zur Gegenelektrode verfestigt. Dabei entsteht ein ungeordnetes Faservlies.
Optional kann die Spinnlösung zusätzlich zu dem Polymer oder Polymerengemisch weitere Komponenten enthalten.

Optional kann während des Spinnvorgangs zwischen Elektrode und Gegenelektrode ein Rahmen aus einem leitfähigen Material eingebracht werden, beispielsweise ein rechtwinkliger Rahmen. In diesem Fall werden die Fasern in Form eines orientierten Vlieses auf diesem Rahmen abgeschieden. Dieses Verfahren zur Herstellung orientierter Meso- und Nanofaservliese ist dem Fachmann bekannt und kann angewendet werden, ohne den Schutzbereich der Patentansprüche zu verlassen.
Als Vliese werden allgemein lockere Materialien bzw. Flächengebilde aus textilen oder nichttextilen Spinnfasern oder Filamenten bezeichnet, deren Zusammenhalt durch die den Fasern eigene Haftung gegeben ist.
"Filament" ist dabei die Bezeichnung für Fasern mit im Wesentlichen unbegrenzter Länge. Aus Filamenten durch Schneiden gewonnene Fasern werden als Spinnfasern bezeichnet.

Unter "Vliesen auf Basis elektrogesponnener Fasern" werden Vliese gemäß obiger Definition verstanden, deren Fasern mit Hilfe des bekannten Elektrospinnverfahrens hergestellt wurden. Die Vliese auf Basis elektrogesponnener Fasern können aus einer oder mehreren Lagen bestehen und können unorientiert oder orientiert bezüglich ihrer Hauptachse gegeneinander vorliegen. Optional können diese Vliese auf Basis elektrogesponnener Fasern mit weiteren Substanzen ausgerüstet sein.

In einer weiteren Ausführungsform besitzen die elektrogesponnenen Vliese eine gewebeartige Struktur. "Gewebeartig" bedeutet hierbei, dass mehrere Vliesschichten übereinander liegen, wobei jede Schicht rechtwinklig zur darüber- und darunter liegenden Schicht liegt. Es existiert jedoch keine Verkreuzung der Fasern, wie dies bei "echten" Geweben der Fall ist. Bei gewebeartigen Vliesen können beliebig viele Schichten übereinander zu liegen kommen.

Vorteilhaft werden erfindungsgemäße stabile sekundäre wässrige Suspensionen umfassend wasserunlösliche bioabbaubare aliphatische Diblockcopolyester versponnen, die 1 Gew.-% bis 25 Gew.-% Diblockcopolyester umfassen. Dabei muss der verwendete Diblockcopolyester einen Schmelzpunkt zwischen 35 °C und 70 °C aufweisen, und der Elektrospinnlösung muss - bezogen auf die gesamte Spinnlösung - ein Anteil von etwa 2 bis 10 Gew.-% eines wasserlöslichen Polymers zugesetzt werden. Geeignete wasserlösliche Polymere sind Poly(ethylenoxid) (PEO), Poly(vinylalkohol) (PVA), Polyacrylamid (PA) und Poly(vinylpyrrolidon) (PVP). Handelt es sich bei dem wasserlöslichen Polymer um PVA, PA oder PVP, so führen Anteile von 2 bis 10 Gew.-% dieses wasserlöslichen Polymers in der Spinnlösung unabhängig vom mittlerem Molekulargewicht dieses wasserlöslichen Polymers zu einer guten Elektrospinnbarkeit. Handelt es sich bei dem wasserlöslichen Polymer um ein Poly(ethylenoxid), so wird vorteilhaft umso weniger PEO eingesetzt, je höher dessen durchschnittliches Molekulargewicht ist. So sollte beispielsweise der Anteil von PEO 900.000 < 4 Gew.-% betragen, um eine gute Elektrospinnbarkeit der Elektrospinnlösung zu gewährleisten. Dagegen sind Spinnlösungen, die 2 bis 10 Gew.-% PEO 300.000 enthalten, gut elektrospinnbar. (Prüfen!) Wie viel Gew.-% eines bestimmenten Poly(ethylenoxids) in der Spinnlösung zu einer guten Elektrospinnbarkeit führen, kann der Fachmann sehr einfach und ohne den Schutzbereich der Patentansprüche zu verlassen herausfinden.

Diese wasserlöslichen Polymere können nach der Faserherstellung ohne Desintegration der Fasern mit Wasser selektiv extrahiert werden. Dabei ist hervorzuheben, dass die Fasern während dieser Extraktion nicht quellen. Fasern, die aus erfindungsgemäßen Suspensionen mittels Elektrospinnen hergestellt werden, sind in Anwesenheit geringer Mengen wasserlöslicher Polymere bei Wasserkontakt bei Temperaturen bis zu 40 °C stabil, d.h. Faserform, Faserdimension und mechanische Stabilität der Fasern bleiben im Wesentlichen unverändert. Unter geringen Mengen wasserlöslicher Polymere sind Mengen von bis zu 10 Gew.-%, bezogen auf das Gewicht der Fasern, verstanden.

Der Schmelzpunkt der Diblockcopolyester von 35 °C bis 70 °C ist wichtig, da die Suspensionspartikel während des Elektrospinnens in den sich bildenden Fasern ineinander verfließen und damit homogene Fasern bilden können. "Homogene Fasern" bedeutet dabei, dass die einzelnen Partikel in den Fasern fast nicht mehr erkennbar sind. Derartige Fasern sind mechanisch stabiler als inhomogene Fasern, bei denen die einzelnen Partikel noch erkennbar sind. Polymere, die bei Raumtemperatur oder darunter schmelzen, sind ebenfalls zum Elektrospinnen weniger geeignet, da die sich bildenden Fasern in diesem Fall einfach verlaufen.

Vorzugsweise beträgt der Durchmesser der erhaltenen Fasern 10 nm bis 10 µm. Besonders bevorzugt sind Faserdurchmesser zwischen 50 nm und 900 nm.

Die erfindungsgemäßen Nano- und Mesofaservliese weisen eine Oberfläche von 5 bis 1.000 g/m² sowie Durchmesser von 10 nm bis 2 µm und Längen von 1 µm bis hin zu einigen Metern auf. Bevorzugt sind Durchmesser von 10 nm bis 1 µm. Dem Fachmann ist bekannt, wie er den Faserdurchmesser einstellen kann. So wird beispielsweise der Faserdurchmesser um so größer, je viskoser, d.h. je konzentrierter die zu verspinnende Polymerlösung ist. Je höher die Flussrate der Spinnlösung pro Zeiteinheit ist, desto größer ist der Durchmesser der erhaltenen elektrogesponnenen Fasern. Des Weiteren hängt der Faserdurchmesser von der Oberflächenspannung und der Leitfähigkeit der Spinnlösung ab. Dies ist dem Fachmann bekannt, und er kann diese Kenntnisse anwenden, ohne den Schutzbereich der Patentansprüche zu verlassen.

Die erfindungsgemäßen Nano- und Mesofasern sowie Nano- und Mesofaservliese können in der Medizin, Pharmazie und Landwirtschaft verwendet werden. So können sie beispielsweise für die Herstellung von Implantaten und Wundverbänden verwendet werden. als Gewebeersatzmaterial, zur Freisetzung von Medikamenten und Pheromonen oder zur Freisetzung biozider, fungizider und insektizider Wirkstoffe.

Die dispergierten bioabbauberen Diblockcopolyester können als bioabbaubare Viskositätsmodifier bzw. Phasenvermittler in Blends, als Klebstoffe, als Lacke, als Papierhilfsstoffe, Flammschutzmittel, Schlagzähmodifier und Hazer transparenter Kunststoffe und zur Herstellung von bioabbaubaren Folien, Filmen, Fasern, Platten, Gefäßen, Schläuchen und Kapillaren für Transport- oder Verpackungszwecke eingesetzt werden.

Der Stand der Technik kennt zahlreiche Verfahren zur Herstellung von Fasern aus Polymersuspensionen mittels Elektrospinnen. Die vorliegende Erfindung unterscheidet sich vom Stand der Technik, da sie erstmals sekundäre Suspensionen bereitstellt und verwendet, insbesondere sekundäre Suspensionen bioabbaubarer Diblockcopolymere, welche bislang nicht mit ausreichenden Feststoffgehalten zugänglich waren: Bislang waren lediglich Suspensionen mit Feststoffgehalten bis max. 2 Gew.-% erhältlich, während die vorliegende Erfindung Suspensionen mit Feststoffgehalten über 10 Gew.-% liefert.

**Bezugszeichenliste**

| | |
|---|---|
| 1 | Spannungsquelle |
| 2 | Kapillardüse |
| 3 | Spritze |
| 4 | Spinnlösung |
| 5 | Gegenelektrode |
| 6 | Faserbildung |
| 7 | Fasermatte |

### Abbildungslegenden

### Fig. 1

Partikelgrößenverteilung der CopolyesterSuspension (PHA-MPEG, 2,5 wt%), d =109 nm, PDI=0,109, gemessen mittels DLS (dynamische Lichtstreuung).

### Fig. 2

Partikelgrößenverteilung der konzentrierten CopolyesterSuspension (PHA-MPEG, 16 wt%), d = 108 nm, PDI=0,115, gemessen mittels DLS (dynamische Lichtstreuung).

### Fig. 3

Elektrogesponnene Diblockcopolyester / PEO-Compositfasern wie elektrogesponnen (links) und Diblockcopolyesterfasern nach Wasserbehandlung (eine Stunde bei 20°C) (rechts), gemessen mittels DLS (dynamische Lichtstreuung).

### Fig-4

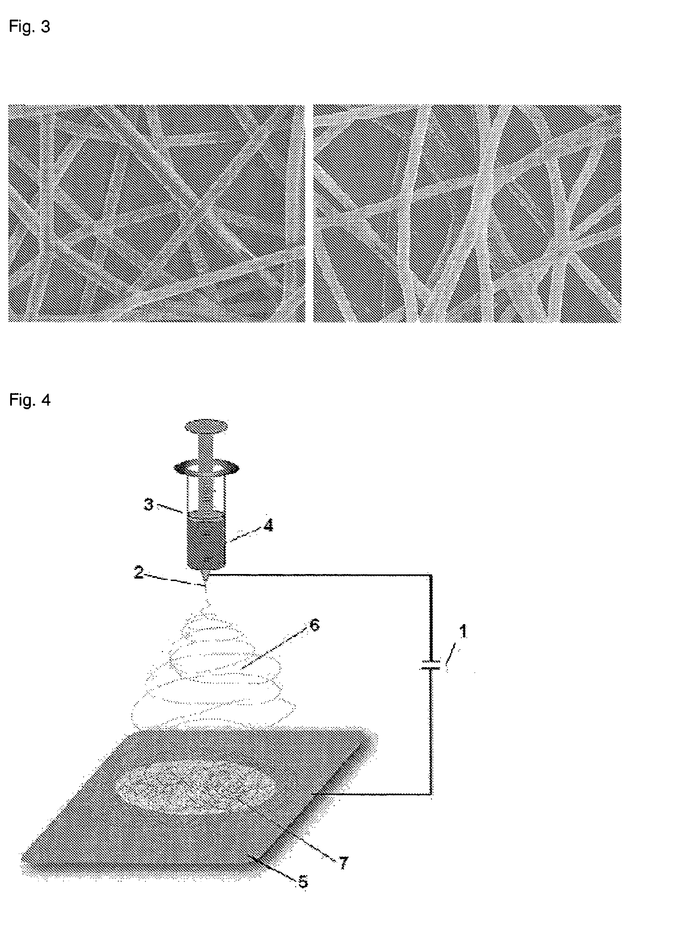

Fig 4 zeigt eine schematische Darstellung einer zur Durchführung des Elektrospinnverfahrens geeigneten Vorrichtung.

Die Vorrichtung umfasst eine Spritze **3**, an deren Spitze sich eine Kapillardüse **2** befindet. Diese Kapillardüse **2** ist mit einem Pol einer Spannungsquelle **1** verbunden. Die Spritze **3** nimmt die zu verspinnende Lösung **4** auf. Gegenüber dem Ausgang der Kapillardüse **2** ist in einem Abstand von etwa 20 cm eine mit dem anderen Pol der Spannungsquelle **1** verbundene Gegenelektrode **5** angeordnet, die als Kollektor für die gebildeten Fasern fungiert.

Während der Betriebs der Vorrichtung wird an den Elektroden **2** und **5** eine Spannung zwischen 18 kV und 35 kV eingestellt und die Spinnlösung **4** unter einem geringen Druck durch die Kapillardüse **2** der Spritze **3** ausgetragen. Auf Grund der durch das starke elektrische Feld von 0,9 bis 2 kV/cm erfolgenden elektrostatischen Aufladung der Polymermoleküle in der Lösung entsteht ein auf die Gegenelektrode **5** gerichteter Materialstrom, der sich auf dem Wege zur Gegenelektrode **5** unter Faserbildung **6** verfestigt, infolge dessen sich auf der Gegenelektrode **5** Fasern **7** mit Durchmessern im Mikro- und Nanometerbereich abscheiden.

### Ausführungsbeispiele

### Ausführungsbeispiel 1:

### Synthese des Diblockcopolymers Polyhexylenadipat-block- methoxypolyethylenglykol (PHA-b-MPEG) (1:1)

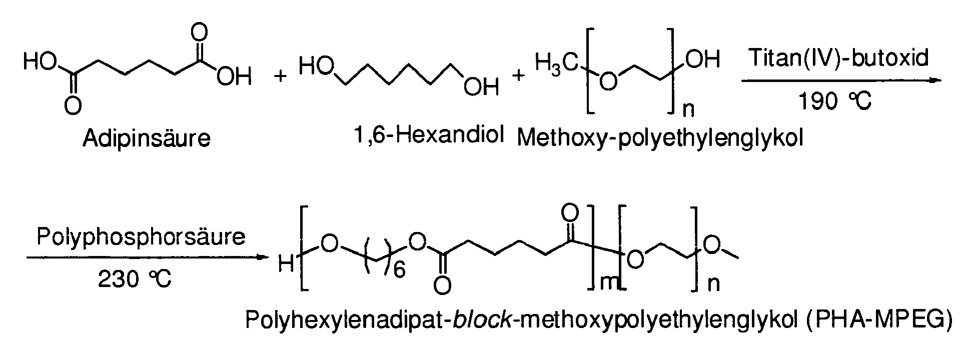

### Chemikalien:

| | | | |
|---|---|---|---|
| Adipinsäure | 146,14 g/mol | 0,779 mol | 113,8 g |
| Hexandiol | 118,18 g/mol | 0,779 mol | 92,03 g |
| MPEG 5K | 5.000 g/mol | 6,84 mmol | 34,2 g |
| Titan-butoxid | 340,32 g/mol | 0,23 mmol | 0,078 ml |
| Polyphosphorsäure | 98 g/mol | 0,44 mmol | 0,043 g |

### Durchführung:

In einem gut ausgeheizten 1 L Dreihalskolben wurden die Adipinsäure, das 1,6-Hexandiol und das Polyethylenglykol vorgelegt. Über eine Spritze wurde der U-mesterungskatalysator Titan(IV)-butoxid zugegeben. Die Reaktion wurde im Salzbad auf 190°C erhitzt und so lange bei dieser Temperatur gehalten, bis die theoretische Menge an Wasser fast vollständig abdestilliert war (ca. 5 h, 27ml). In der 2. Reaktionsstufe wurde die Polyphosphorsäure als Kondensationsmittel zugefügt, die Temperatur des Salzbads wurde auf 230°C erhöht und mit Hilfe einer Ölpumpe langsam ein Hochvakuum auf die Reaktion gelegt. Anschließend wurde die Reaktion weitere 40 h reagieren lassen. Es ergab sich ein braunes hochviskoses Polymer.

Das Polymer wurde in ca.1 L THF gelöst und in 5L Hexan ausgefällt. Der Niederschlag wurde abfiltriert und im Memranpumpenvakuum getrocknet.

### Ausführungsbeispiel 2:

### Dispergierung des synthetisierten Diblockcopolyester (PHA-b-MPEG) (1:1)

25 g Copolyester aus Beispiel 1 wurde in 625 mL Aceton gelöst und zu Brij^{®}78 Lösung (2,5 mg in 1 L Wasser) gegeben. Die Mischung wurde 4 min mit Ultraschall (30 W) behandelt und im Abzug für 24 h stehen gelassen, bis das Aceton vollständig verdampft war. Es wurde 1 L PolymerSuspension hergestellt. (2,5Gew.-%). Wenn man das Wasser der Suspension weiter verdampfen lässt, kann die Suspension bis auf 3 Gew.-% konzentriert werden. Die Suspensionen wurden ohne Filtration mit DLS vermessen.

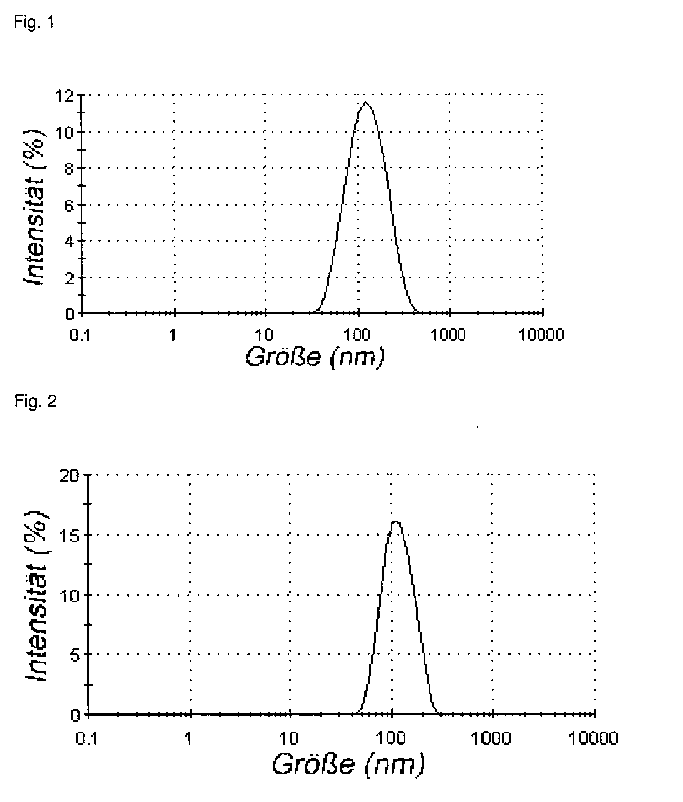

Die Partikelgrößenverteilungen sind in Fig. 1 gezeigt.

### Ausführungsbeispiel 3:

### Dialyse der PHA-MPEG-Suspension

Es wurde Polyvinylakohol für die Dialyse verwendet und ein Dialyseschlauch (MWCO = 12-14,000; Diameter = 76mm) benutzt um die konzentriete Suspension herzustellen.

500 mL PolymerSuspension wurden in einem Dialyseschlauch eingefüllt und in ca. 6 L PVA-Lösung getaucht. Die Copolyesterdipsersion wurde bei Raumtemperatur für 100 Stunden lang dialysiert. Dabei wurde der Gewichtsverlust der PolymerSuspension nach den verschiedenen Zeitpunkten gemessen und die Konzentration der PolymerSuspension ausgerechnet. Die endgültige Konzentration betrug 16 wt%.

Vor und nach der Dialyse wurden die Partikelgrößen und Partikelgrößenverteilung mit Hilfe der PCS untersucht. Es wurde keine Aggregation beobachtet.
Fig. 2 zeigt das Diagramm zur Partikelgrößenverteilung nach der Dialyse.

### Ausführungsbeispiel 4:

### Elektrospinnen der konzentrierten DiblockcopolyesterSuspension (16 Gew.-%)

Die konzentrierte DiblockcopolyesterSuspension (16 Gew.-%) wurde mit einer Lösung Polyethylenoxid (3 Gew.% in Wasser) gemischt und bei einem Vorschub von 0.05 mL / min, einem Elektrodenabstand von 15 cm bei einer Spannung von 15 kV mit Aluminiumfolie als Gegenelektrode elektrogesponnen.
Anschließend wurden die erhaltenen Fasern für eine Stunde bei 20 °C mit Wasser behandelt.
Fig. 3 zeigt die erhaltenen Fasern unmittelbar nach dem Spinnen (links) sowie nach einstündiger Behandlung mit Wasser (rechts).

### Ausführungsbeispiel 5:

### Herstellung einer selbststabilisierten PHA-b-MPEG-Suspension

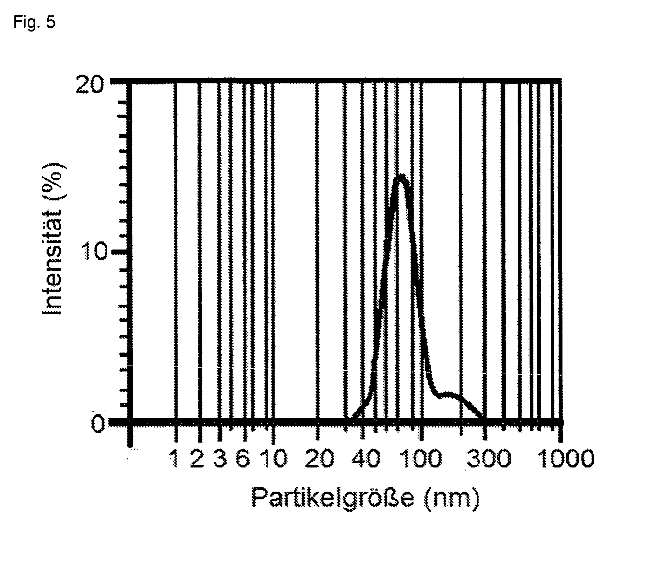

25 g des Copolyesters aus Beispiel 1 wurden in 625 mL Aceton gelöst und anschließend unter Rühren zu 1 L destilliertem H₂O gegeben. Das Gemisch wurde sodann unter Rühren 4 min bei 40 W mit Ultraschall behandelt, bevor man das Aceton 48 h bei RT unter Rühren evaporieren ließ.
Zum Aufkonzentrieren der Suspension wurden 500 mL der Lösung in einen Dialyseschlauch der Firma Spektra Por gegeben und dieser 100 h in 2 L einer wässrigen 15 Gew.-% Mowiol 8-88 Lösung getaucht. Durch weitere zweitägige Dialyse der ca. 14 Gew.-% Lösung in einer "frischen" 15 Gew.-% Mowiol 8-88-Lösung (2L) konnte der Feststoffanteil in der Suspension bis auf 26 % gesteigert werden.
Partikelgrößen: 72 nm und 164 nm, siehe Fig. 5

### Ausführungsbeispiel 6:

### Elektrospinnen der selbststabilisierten PHA-b-MPEG-Suspension mit verschiedenen Gewichtsanteilen an PEO

Die selbststabilisierte PHA-b-MPEG-Suspension aus Beispiel 5 wurde mit verscheidenen Gewichtsanteilten an PEO versetzt und anschließend elektroversponnen.

Eingesetzte Menge an PEO 900.000 in Gewichtsprozent bezogen auf die Suspension:
3,5 Gew.-% PEO (aufgrund der hohen Viskosität nur sehr schlecht verspinnbar)
2 Gew.-% PEO
Eingesetzte Menge an PEO 300.000 in Gewichtsprozent:
3,5 Gew.-% PEO
2 Gew.-% PEO

### Das PEO wurde direkt in der Suspension gelöst. Bei dem hochmolekularen Matrixpolymer PEO 900.000 und der hohen Konzentration (3,5 Gew.-% PEO bezogen auf die Suspension) war die Lösung aufgrund einer zu hohen Viskosität nur schlecht verspinnbar.

Elektrospinnen / Spinnparameter:
Spannung U (oben) = 15 kV
Spannung U (unten) = 10 kV
Abstand der Elektroden: 22 cm
Vorschub 0,5 ml/min

## Patentansprüche

1. Stabile sekundäre wässrige Suspensionen umfassend mindestens einen wasserunlöslichen bioabbaubaren aliphatischen Diblockcopolyester gemäß Formel (I) 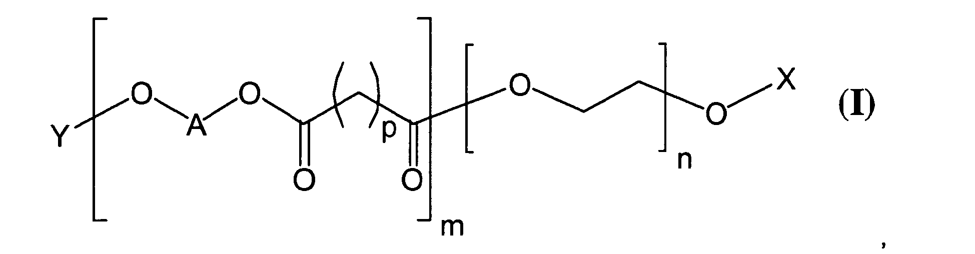 worin
A = eine lineare oder verzweigte Alkylengruppe mit 3 bis 12 Kohlenstoffatomen
p = 1 bis 14
m = 10 bis 500
n = 10 bis 500
X = H, ein Alkoholat, eine lineare, verzweigte oder cyclische Alkylgruppe mit 1 bis 20 Kohlenstoffatomen oder eine Phenylgruppe
Y = H, ein Alkoholat, eine lineare, verzweigte oder cyclische Alkylgruppe mit 1 bis 20 Kohlenstoffatomen, ein Carboxylat, ein Carbonsäurerest, ein Ester, ein Thioether,
**dadurch gekennzeichnet, dass**
- der mindestens eine Diblockcopolyester einen Block eines aliphatischen Polyesters und einen Block eines Polyethylenoxids enthält und
- der Feststoffgehalt des mindestens einen Diblockcopolyesters in der Suspension mindestens 10 Gew.-% beträgt und
- der Schmelzpunkt des mindestens einen Diblockcopolyesters zwischen 35 °C
und 70 °C liegt und
- die Masse des Polyethylenoxidblocks in dem mindestens einen Diblockcopolyester zwischen 500 und 10.000 Dalton beträgt und
- der mindestens eine Diblockcopolyester eine molekulare Löslichkeit in Wasser von weniger als 1 % aufweist.

2. Stabile sekundäre wässrige Suspension gemäß Anspruch 1, **dadurch gekennzeichnet, dass** Y eine lineare, verzweigte oder cyclische Alkylgruppe und X eine lineare, verzweigte oder cyclische Alkylgruppe oder eine Phenylgruppe ist.

3. Stabile sekundäre wässrige Suspension gemäß einem der Ansprüche 1 und 2, **dadurch gekennzeichnet, dass** der aliphatische Ester ein Ester einer 1,w-Alkandicarbonsäure ist, ausgewählt aus Malonsäure, Bernsteinsäure, Glutarsäure, Adipinsäure, Pimelinsäure, Suberinsäure, Azelainsäure, Sebacinsäure, Dodecandisäure, Brassylsäure, Tetradecandisäure, Thapsiasäure.

4. Stabile sekundäre wässrige Suspension gemäß einem der Ansprüche 1 bis 3, **dadurch gekennzeichnet, dass** der aliphatische Ester ein Ester eines Alkandiols ist, ausgewählt aus 1,2-Propandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol.

5. Stabile sekundäre wässrige Suspension gemäß einem der Ansprüche 1 bis 4, dadurch qekennzeichnet, dass das Molverhältnis des Polyesterblocks zum Polyethylenglykolblock 0,5 - 1,5 zu 0,5 -1,5 mol/mol beträgt.

6. Stabile sekundäre wässrige Suspension gemäß einem der Ansprüche 1 bis 5, **dadurch gekennzeichnet, dass** die Suspension mindestens 10 Gew.-% und maximal 30 Gew.-% des Diblockcopolyesters enthält.

7. Stabile sekundäre wässrige Suspension gemäß Anspruch 5, **dadurch gekennzeichnet, dass** die Suspension zusätzlich ein nichtionisches Tensid enthält.

8. Verfahren zur Herstellung wässrigen stabilen Suspensionen bioabbaubarer Copolyester gemäß einem der Ansprüche 1 bis 7, **gekennzeichnet durch** die Schritte:
a) Lösen von Partikeln der bioabbaubaren Diblockcopolyester in einem polar aprotischen Lösungsmittel
b) Mischen dieser Lösung mit Wasser und anschließendes Entfernen des polar aprotischen Lösungsmittels,
c) Dialysieren der aus Schritt b) erhaltenen Suspension gegen ein wasserlösliches Polymer.

9. Verwendung von stabilen sekundären wässrigen Suspensionen gemäß einem der Ansprüche 1 bis 7 als bioabbaubare Viskositätsmodifier, Phasenvermittler in Blends, als Klebstoffe, Lacke, Papierhilfsstoffe, Flammschutzmittel, Schlagzähmodifier und Hazer transparenter Kunststoffe und zur Herstellung von bioabbaubaren Folien, Filmen, Fasern, Platten, Gefäßen, Schläuchen und Kapillaren für Transport- oder Verpackungszwecke.

10. Verwendung von stabilen sekundären wässrigen Suspensionen gemäß einem der Ansprüche 1 bis 7 zur Herstellung von Nano- und Mikrofasern sowie Nano- und Mikrofaservliesen mit ungeordneten oder orientierten Fasern mittels Elektrospinnen, wobei der Diblockcopolyester einen Schmelzpunkt von 35 °C bis 70 °C aufweist und der Elektrospinnlösung - bezogen auf die gesamte Spinnlösung - ein Anteil von etwa 2 bis 10 Gew.-% eines wasserslöslichen Polymers zugesetzt wird.

11. Verwendung gemäß Anspruch 10, **dadurch gekennzeichnet, dass** die wasserlöslichen Polymere nach der Faserherstellung selektiv mit Wasser extrahiert werden.

12. Nano- und Mesofasern sowie Nano- und Mesofaservliese, erhältlich durch Elektrospinnen einer sekundären wässrigen Suspension gemäß einem der Ansprüche 1 bis 7.

13. Verwendung von Nano- und Mesofasern sowie Nano- und Mesofaservliesen gemäß Anspruch 12 als Gewebeersatzmaterial, zur Freisetzung von Medikamenten und Pheromonen oder zur Freisetzung biozider, fungizider und insektizider Wirkstoffe.

## Claims

1. Stable secondary aqueous suspensions comprising at least one water-insoluble
biodegradable aliphatic diblock copolyesters according to formula (1) 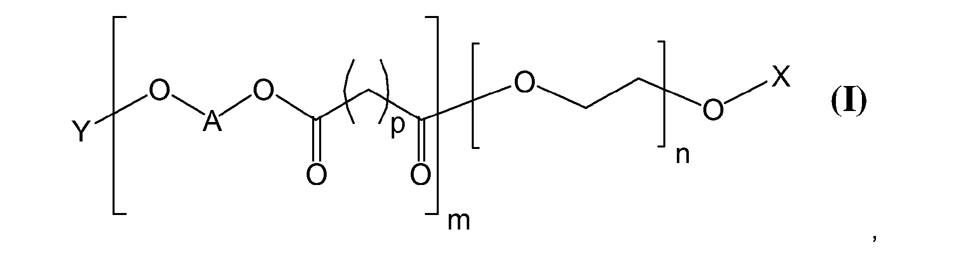 wherein
A = a linear or branched alkyl group with 3 to 12 carbon atoms p = 1 to 14
m = 10 to 500
n = 10 to 500
X = H, an alkoxide, a linear, branched or cyclic alkyl group with 1 to 20 carbon
atoms or a phenyl group
Y = H, an alkoxide, a linear, branched or cyclic alkyl group with 1 to 20 carbon
atoms, a carboxylate, a carboxylic acid residue, an ester, a thioether,
wherein
- the at least one diblock copolyester comprises one block of an aliphatic polyester and one block of a polyethylene oxide, and
- the solid content of the at least one diblock copolyester in the suspension amounts to at least 10 wt.-%, and
- the melting point of the at least one diblock copolyester is between 35°C and 70°C, and
- the mass of the polyethylene oxide block in the at least one diblock copolyesters amounts to between 500 and 10,000 dalton, and
- the at least one diblock copolyester comprises a molecular solubility in water of less than 1%.

2. Stable secondary aqueous suspension according to claim 1, wherein Y is a linear, branched or cyclic alkyl group and X a linear, branched or cyclic alkyl group or a phenyl group.

3. Stable secondary aqueous suspension according to one of the claims 1 and 2, wherein the aliphatic ester is an ester of an 1,ω-alkane dicarboxylic acid, selected from malonic acid, succinic acid, glutaric acid, adipic acid, pimelic acid, suberic acid, azelaic acid, sebacic acid, dodecanoic acid, brassylic acid, tetradecanoic acid, thapsic acid.

4. Stable secondary aqueous suspension according to one of the claims 1 to 3, wherein the aliphatic ester is an ester of an alkanediol, selected from 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol.

5. Stable secondary aqueous suspension according to one of the claims 1 to 4, wherein the molar ratio of the polyester block with regard to the polyethylene glycol block amounts to 0.5 - 1.5 to 0.5 - 1.5 mol/mol.

6. Stable secondary aqueous suspension according to one of the claims 1 to 5, wherein the suspension comprises at least 10 wt.-% and a maximum of 30 wt.-% of the diblock copolyester.

7. Stable secondary aqueous suspension according to claim 5, wherein the suspension additionally comprises a nonionic surfactant.

8. Method to produce aqueous stable suspensions of biodegradable copolyesters according to one of the claims 1 to 7, **characterised by** the following steps:
a) Dissolving of particles of the biodegradable diblock copolyesters in a polar aprotic solvent
b) Mixing of this solution with water and subsequent removal of the polar aprotic solvent,
c) Dialysing the suspension obtained from step b) against a water-soluble polymer.

9. Use of stable secondary aqueous suspensions according to one of the claims 1 to 7 as biodegradable viscosity modifiers, compatibilisers in blends, as glues, varnishes, as paper additives, flame retardants, impact modifiers and hazers of transparent plastics, and for the production of biodegradable sheets, films, fibres, plates, vessels, tubes and capillaries for transport or packaging purposes.

10. Use of stable secondary aqueous suspensions according to one of the claims 1 to 7 for the production of nano- and microfibres and nano- and microfibre nonwovens with non-oriented or oriented fibres by means of electrospinning, wherein the diblock copolyesters comprises a melting point of 35°C to 70°C, and a ratio of approx. 2 to 10 wt.-% - with regard to the entire spinning solution - of a water-soluble polymer is added to the electrospinning solution.

11. Use according to claim 10, wherein the water-soluble polymers are selectively extracted with water after the fibre production.

12. Nano- and mesofibres and nano- and mesofibre nonwovens, obtainable via electrospinning of a secondary aqueous suspension according to one of the claims 1 to 7.

13. Use of nano- and mesofibres and nano- and mesofibre nonwovens according to claim 12 as a substitute for fabric material, for the release of pharmaceuticals and pheromones, or for the release of biocidal, fungicidal and insecticidal active agents.

## Revendications

1. Suspensions aqueuses secondaires stables comprenant au moins un copolyester
à double bloc aliphatique non hydrosoluble biodégradable selon la formule (I) 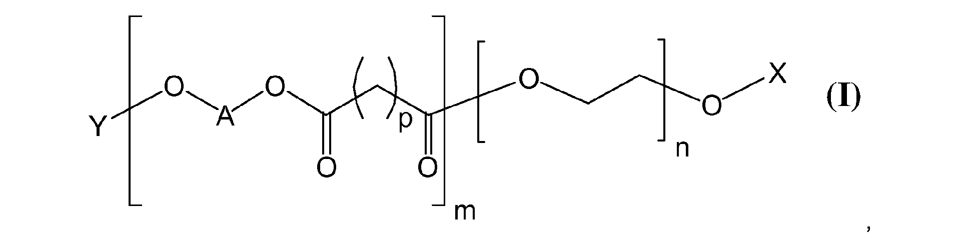 où
A = un groupe alkylène linéaire ou ramifié avec 3 à 12 atomes de carbone
p = 1 à 14
m= 10 à 500
n = 10 à 500
X = H, un alcoolate, un groupe alkyle linéaire, ramifié ou cyclique avec 1 à 20 atomes de carbone ou un groupe phényle
Y = H, un alcoolate, un groupe alkyle linéaire, ramifié ou cyclique avec 1 à 20 atomes de carbone, un carboxylate, un résidu d'acide carboxylique, un ester, un thioéther,
**caractérisées en ce que**,
- l'au moins un copolyester à double bloc contient un bloc d'un polyester aliphatique et un bloc d'un oxyde de polyéthylène
- la teneur en matières solides d'au moins un copolyester à double bloc dans la suspension est d'au moins 10% en poids, et
- le point de fusion d'au moins un copolyester à double bloc se trouve entre 35°C et 70°C et
- la masse du bloc d'oxyde de polyéthylène dans l'au moins un copolyester à double bloc se situe entre 500 et 10.000 daltons et
- l'au moins un copolyester à double bloc présente une solubilité moléculaire dans l'eau de moins de 1 %.

2. Suspension aqueuse secondaire stable selon la revendication 1, **caractérisée en ce que** Y est un groupe alkyle linéaire, ramifié ou cyclique et X est un groupe alkyle linéaire, ramifié ou cyclique ou un groupe phényle.

3. Suspension aqueuse secondaire stable selon l'une des revendications 1 et 2, **caractérisée en ce que** l'ester aliphatique est un ester d'un acide alcanedicarboxylique 1,ω choisi parmi l'acide malonique, l'acide succinique, l'acide glutarique, l'acide adipique, l'acide pimélique, l'acide subérique, l'acide azélaïque, l'acide sébacique, l'acide dodécanedioïque, l'acide brassylique, l'acide tétradécanedioïque, l'acide thapsique.

4. Suspension aqueuse secondaire stable selon l'une des revendications 1 à 3, **caractérisée en ce que** l'ester aliphatique est un ester d'un alcane-diol choisi parmi le 1,2-propanediol, le 1,3-propanediol, le 1,4-butanediol, le 1,5-pentanediol, le 1,6-hexanediol, le 1,7-heptanediol, le 1,8-octanediol, le 1,9-nonanediol, le 1,10-décanediol, le 1,11-undecanediol, le 1,12-dodécanediol.

5. Suspension aqueuse secondaire stable selon l'une des revendications 1 à 4, **caractérisée en ce que** le rapport molaire du bloc de polyester sur le bloc de polyéthylène glycol est de 0,5 - 1,5 à 0,5 - 1,5 mol/mol.

6. Suspension aqueuse secondaire stable selon l'une des revendications 1 à 5, **caractérisée en ce que** la suspension contient au minimum 10 % et au maximum 30% du poids du copolyester à double bloc.

7. Suspension aqueuse secondaire stable selon la revendication 5, **caractérisée en ce que** la suspension contient en outre un agent tensioactif non ionique.

8. Procédé pour la production de suspensions stables aqueuses de copolyesters biodégradables selon l'une des revendications 1 à 7, **caractérisé par** les étapes :
a) Dissoudre les particules de copolyesters à double bloc biodégradables dans un solvant polaire aprotique,
b) Mélanger cette solution avec de l'eau et éliminer ensuite le solvant polaire aprotique,
c) Dialyser la suspension obtenue à l'étape b) contre un polymère hydrosoluble.

9. Utilisation de suspensions aqueuses secondaires stables selon l'une des revendications 1 à 7 comme modificateurs de viscosité biodégradables, médiateurs de phases dans des mélanges, comme adhésifs, laques, adjuvants pour papier, agents ignifuges, agents de modification de la résilience et agents de trouble de matériaux synthétiques transparents et pour la production de feuilles, de films, de fibres, de plaques, de récipients, de flexibles et de capillaires biodégradables destinés à des fins de transport ou d'emballage.

10. Utilisation de suspensions aqueuses secondaires stables selon l'une des revendications 1 à 7 pour la production de nanofibres et de microfibres ainsi que des non-tissés de nanofibres et de microfibres constitués de fibres non ordonnées ou orientées par électrofilage, dans laquelle le copolyester à double bloc présente un point de fusion de 35°C à 70°C et une proportion d'environ 2 à 10% en poids d'un polymère hydrosoluble est ajoutée à la solution d'électrofilage, sur la base de la solution de filage totale.

11. Utilisation selon la revendication 10, **caractérisée en ce que** les polymères hydrosolubles sont extraites de manière sélective avec de l'eau après la production de fibres.

12. Des nanofibres et mesofibres ainsi que des non-tissés de nanofibres et de mesofibres pouvant être obtenus par électrofilage d'une suspension aqueuse secondaire selon l'une des revendications 1 à 7.

13. Utilisation de nanofibres et mesofibres ainsi que des non-tissés de nanofibres et mesofibres selon la revendication 12 comme matériau de remplacement de tissu, pour la libération de médicaments et de phéromones ou la libération d'agents biocides, fongicides et insecticides.
